(19) Europäisches Patentamt
European Patent Office
Office européen des brevets

(11) **EP 3 356 071 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(51) Int Cl.:
**B23C 5/10** *(2006.01)*     **B23P 9/04** *(2006.01)*
**B23P 25/00** *(2006.01)*     **B24B 39/06** *(2006.01)*

(21) Anmeldenummer: **16766958.9**

(22) Anmeldetag: **16.09.2016**

(86) Internationale Anmeldenummer:
**PCT/EP2016/071994**

(87) Internationale Veröffentlichungsnummer:
**WO 2017/055108 (06.04.2017 Gazette 2017/14)**

(54) **SCHLICHTFRÄSWERKZEUG, INSBESONDERE SCHAFTFRÄSER**

FINISHING TOOL, IN PARTICULAR END MILLING CUTTER

OUTIL DE FRAISAGE DE FINITION, EN PARTICULIER FRAISE À QUEUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2015 DE 102015116443**

(43) Veröffentlichungstag der Anmeldung:
**08.08.2018 Patentblatt 2018/32**

(73) Patentinhaber: **FRANKEN GmbH & Co. KG Fabrik für**
**Präzisionswerkzeuge**
**90607 Rückersdorf (DE)**

(72) Erfinder:
• **GLIMPEL, Helmut**
**91207 Lauf a. d. Pegnitz (DE)**
• **LAUFFER, Hans-Jürgen**
**91207 Lauf a. d. Pegnitz (DE)**
• **BREMSTAHLER, Andreas**
**91230 Happurg (DE)**

(74) Vertreter: **Schröer, Gernot H.**
**Meissner Bolte Patentanwälte**
**Rechtsanwälte Partnerschaft mbB**
**Bankgasse 3**
**90402 Nürnberg (DE)**

(56) Entgegenhaltungen:
**DE-A1-102006 053 330     DE-A1-102008 002 406**

**Beschreibung**

Die Erfindung betrifft ein Werkzeug, insbesondere ein Schlichtwerkzeug gemäß dem Oberbegriff des Patentanspruchs 1.

Ein derartiges Schlichtwerkzeug geht beispielsweise aus der DE 10 2008 002406 A1 hervor.

Ein Schaftfräser (end mill) ist zum flächigen Abtragen von Material an einer Werkstückoberfläche vorgesehen und wird dazu in einer Fräsbewegung durch Drehung des Schaftfräsers um eine Werkzeugachse in einer vorgegebenen Drehrichtung bei gleichzeitigem Vorschub relativ zur Werkstückoberfläche an dieser entlang, meist parallel zur Werkstückoberfläche, bewegt. In der Regel weist ein Schaftfräser einen entlang der Werkzeugachse langgestreckten, im Wesentlichen zylindrischen Schaft und ein sich anschließendes Kopfteil mit einem Umfangsbereich mit Umfangsfrässchneiden und einer Stirnseite mit oder ohne Stirnfrässchneiden auf. Der Schaftfräser weist am vom Kopfteil abgewandten Ende einen Einspannbereich zum Einspannen in eine Werkzeugaufnahme auf, die mit einer Werkzeugmaschine gekoppelt ist.

Um den flächigen spanenden Materialabtrag zu ermöglichen, erstrecken sich die Umfangsfrässchneiden durchgehend und ohne Unterbrechungen auf einer um die Werkzeugachse rotationssymmetrischen, in der Regel zylindrischen, Umfangsfläche über eine axiale Länge axial zur Werkzeugachse (oder: in Projektion auf die Werkzeugachse) und greifen im Wesentlichen über ihre gesamte axiale Länge mit einer zur Werkzeugachse radialen Eingriffstiefe in die Werkstückoberfläche ein. Die axiale Länge der Frässchneiden ist dabei deutlich größer, in der Regel um mindestens den Faktor 5 bis 10 größer, als die radiale Eingriffstiefe. Die Umfangsfrässchneiden können zwar auch parallel zur Werkzeugachse geradlinig verlaufen, sind jedoch in der Regel um die Werkzeugachse unter einem Drallwinkel gedrallt verlaufend oder helikal ausgebildet. Durch die Fräsbewegung erfolgt der für das Fräsen kennzeichnende diskontinuierliche Schnitt der Frässchneiden, der das Abheben von Spänen des Werkstücks über die Oberfläche bewirkt.

Man unterscheidet hinsichtlich der Oberflächengüte der bearbeiteten Oberfläche zwischen Schruppfräsern, bei denen mit Schruppschneiden bei größerem Spanabtrag (oder: Spanvolumen) durch höheren Vorschub eine gröbere Oberfläche erzeugt wird, einerseits und Schlichtfräsern, bei denen mit glatten Schlichtschneiden bei kleinerem Spanabtrag durch geringeren Vorschub eine feinere oder glattere Oberfläche erzeugt wird, andererseits.

Zum Schruppfräsen können die Umfangsfrässchneiden in radialer Richtung neben einer glatten und keine Wendepunkte (Punkte, bei denen sich die Krümmung im Vorzeichen ändert) aufweisenden Ausbildung mitunter auch leicht gewellt mit Erhebungen und Vertiefungen (oder: Bergen und Tälern) und Wendepunkten dazwischen ausgebildet sein. Die bei Schruppfräsern vorgesehenen Erhebungen bei welligen Schneiden bilden dann runde Spanteiler, aufgrund derer die Späne zerteilt werden, wodurch ein größeres Spanvolumen oder ein tieferer Eingriff mit größeren Spänen in das Werkstück möglich ist.

Zum Schlichtfräsen sind die Umfangsfrässchneiden eines Schaftfräsers dagegen normalerweise in radialer Richtung glatt und ohne Wendepunkte ausgebildet, um die hohe Oberflächengüte oder entsprechend glatte Oberfläche an dem Werkstück beim Schlichten zu ermöglichen. Schlichtfrässchneiden sind also glatt und ohne Spanteiler ausgebildet.

Schließlich gibt es noch Schruppschlichtfräser, die flache Spanteiler aufweisen, welche auf einer gedachten geraden Linie liegen und durch meist runde Vertiefungen voneinander getrennt sind.

Bei allen drei Frässertypen Schlichtfräsern, Schruppfräsern und Schruppschlichtfräsern schneidet jede Frässchneide über ihre gesamte Länge. Die radiale Eingriffstiefe ist also tiefer als die Vertiefungen in den Frässchneiden der Schruppfräser und der Schruppschlichtfräser oder mit anderen Worten größer als die Höhe der Erhebungen, so dass flächig über den gesamten Bereich der Werkstückoberfläche das Material abgetragen wird, an dem sich die Frässchneiden entlang bewegt, wobei die Erhebungen lediglich als Spanteiler für die abgehobenen Späne wirken.

Aus EP 2 058 074 A1 ist ein Fräser zum spanabhebenden Bearbeiten von Werkstücken bekannt mit einem zylindrischen Werkzeugschaft mit einem Fräsbereich, der zumindest eine Frässchneide aufweist. Die Frässchneide ist in Umfangsrichtung des Fräsers gelegen und erstreckt sich in einem Schraubengang mit einem gegenüber der Mittelachse des Fräsers angestellten Steigungswinkel, wobei sich an die Frässchneide jeweils eine Spanabführrille zum Abführen der beim Fräsen erzeugten Späne des zu bearbeitenden Werkstückes mit einer von der Frässchneide ausgehenden Freifläche anschließt. Zumindest ein Teil der Freifläche ist mit einer Schruppverzahnung versehen, die von der Frässchneide ausgeht und sich, in Umfangsrichtung des Fräsers gesehen, über zumindest einen Teil des Querschnittes der jeweiligen Spanabführrille erstreckt. Die Schruppverzahnung ist in Längsrichtung der Schraubengänge als aufgeraute Oberfläche der Freifläche ausgebildet und weist insbesondere einen Wellenschliff auf, der abwechselnd Berge und Täler aufweist.

Aus DE 20 2006 013 594 U1 ist ein kombinierter Schrupp-/Schlichtfräser bekannt, bei dem die Fräsflächen in Umfangsrichtung des Fräsers auf den Schraubengängen liegen und jeweils ein Schraubengang mit einer Schruppfläche und ein weiterer Schraubengang mit einer glatten Schlichtfläche versehen ist oder auch die Fräsfläche eines Schraubengangs abwechselnd mit Schruppbereichen und Schlichtbereichen versehen ist.

Die DE-PS 1 137 284 offenbart einen Fräser mit hinterdrehten oder hinterschliffenen, gewindeförmig angeordneten Zähnen, die jeweils nebeneinander auf einzelnen Stollen sitzen, wobei auf jedem Zahnstollen abwechselnd runde Schruppzähne und abgeflachte Schlichtzähne gewindeförmig angeordnet sind, wobei die aufeinanderfolgenden Abstände von einem Schruppzahn zu den daneben angeordneten Schlichtzahn verschieden groß sind. Dadurch werden von den abgerundeten Schruppzähnen sehr viel stärkere Späne als von den flachen Schlichtzähnen abgenommen.

Aus CH 638 126 A5 ist ein Werkzeug zum Feinbearbeiten von Bohrungen durch spanloses Verformen mittels einer Taumelbewegung bekannt mit einem mindestens ein Formelement tragenden Kopf, der an einem Zapfen eines Halters angeordnet ist, wobei der Kopf am Zapfen um eine zur Achse des Halters geneigte Achse drehbar ist und wobei die Arbeitsfläche jedes Formelements an einer gedachten kugelförmigen Umhüllung des Kopfes liegt.

Aus EP 1 669 149 B1 sind ein Gewindewerkzeug sowie ein Verfahren zur Erzeugung eines Gewindes bekannt. Das Gewindewerkzeug umfasst in einem Gewindeerzeugungsbereich wenigstens einen spanabhebend arbeitenden Gewindefräszahn sowie wenigstens einen spanlos umformend arbeitenden Gewindeformzahn oder Gewindeformkeil. Gewindefräszahn und Gewindeformzahn drehen bei der Gewindeerzeugung gemeinsam um eine Werkzeugachse und sind entlang eines Außenumfangs des Gewindeerzeugungsbereiches in Drehrichtung um die Werkzeugachse versetzt zueinander oder hintereinander oder aufeinander folgend angeordnet und greifen dadurch bei der Drehung abwechselnd in die Werkstückoberfläche ein. Dabei erzeugen Gewindefräszahn und Gewindeformzahn verschiedene Profilabschnitte des Gewindeprofils (Gewindegangquerschnitt), d.h. ihre Wirkprofile ergänzen einander zu dem fertigen Gewindeprofil. Jeweils eine Anzahl von um die Gewindesteigung axial zueinander beabstandeten Gewindefräszähnen und Gewindeformzähnen sind in jeweils einer zur Werkzeugachse axialen Reihe angeordnet, wobei die Reihen um die Werkzeugachse gedrallt oder auch gerade und parallel zur Werkzeugsachse verlaufend ausgebildet sein können. Axial gesehen sind zwischen den Gewindefräszähnen und ebenso zwischen den Gewindeformzähnen Lücken gebildet, in denen die Werkstückoberfläche nicht bearbeitet wird, damit nur der gewünschte Gewindegang mit der gewünschten Gewindesteigung erzeugt wird und dazwischen das Material des Werkstücks stehen bleibt. Die axiale Länge jeder Gewindefrässchneide jedes Gewindeschneidzahnes oder des Gewindeformsteges jedes Gewindeformzahnes ist etwas kleiner als die Breite des Gewindeganges aufgrund der Schrägstellung unter der Gewindesteigung und ist nur ungefähr genauso groß wie die radiale Eingriffstiefe, die durch die Zahnhöhe bestimmt ist. Die Frässchneide des Gewindefräszahnes und der Formsteg des Gewindeformzahnes liegen ferner aufgrund ihrer Schrägstellung gemäß der Gewindesteigung und ihrer Gewindewirkprofile nicht auf einer um die Werkzeugachse rotationssymmetrischen, insbesondere zylindrischen, Umfangsfläche. Dieses Gewindewerkzeug bewegt sich in einer speziellen Zirkularbewegung, die aus einer an die Gewindesteigung und den Gewindedurchmesser angepassten helikalen Bewegung um die Gewindeachse und einer schnelleren Drehung um die Werkzeugachse zusammengesetzt ist, und mit einer genau einzuhaltenden radialen Eingriffstiefe, wie beim Gewindefräsen üblich.

Es handelt sich bei dem Werkzeug gemäß EP 1 669 149 B1 somit um ein sehr spezielles Gewindewerkzeug, das für einen flächigen Materialabtrag an einer Oberfläche eines Werkstücks wie bei einem Schaftfräser nicht geeignet ist, sondern nur zum Erzeugen eines Gewindes in der speziellen Gewindefräsbewegung.

Bei bestimmten Anwendungszwecken ist es wünschenswert, dass ein Bauteil zum einen aus einem massiven Material gefertigt ist, zum anderen hohe optische und haptische Ansprüche erfüllen muss, beispielsweise bei wertigen Aluminiumgehäusen von Mobiltelefonen. Hier muss also eine besonders wertige Oberfläche mit einer sehr hohen Oberflächengüte erzeugt werden. Soll ein derartiges Teil mit einer derartig guten Oberfläche aus einem Material gefräst werden, ist es bislang erforderlich, in einem oder mehreren anschließenden Arbeitsgängen das Bauteil mit feiner arbeitenden Schlichtfräswerkzeugen nachzubearbeiten, um glattere Oberfläche mit verbesserte Maß- und Formgenauigkeit oder Oberflächengüte zu erzeugen. Auch als Vorbereitung für ein Polieren kann ein solches Schlichten vorgesehen sein. Jedoch werden dafür mehrere verschiedene Werkzeuge und Arbeitsgänge benötigt.

Es ist daher eine Aufgabe der Erfindung, ein neues Schlichtwerkzeug bereit zu stellen, insbesondere ein Schlichtwerkzeug, das eine Oberfläche eines Werkstücks in einem Arbeitsgang mit einer hohen Oberflächengüte bearbeitet.

Zur Lösung dieser Aufgabe ist ein Schlichtwerkzeug gemäß Patentanspruch 1 vorgesehen.

Jedes Merkmal, das in der Beschreibung oder Zeichnung beschrieben oder offenbart ist, kann für sich, unabhängig oder losgelöst von dem Zusammenhang, in dem es steht, allein oder in jeglicher Kombination mit einem oder mehreren anderen Merkmalen, das oder die in den Patentansprüchen oder in der Beschreibung oder Zeichnung beschrieben oder offenbart ist oder sind, beansprucht werden.

Das Schlichtwerkzeug, insbesondere Schlichtschaftfräser, gemäß Patentanspruch 1 ist geeignet und bestimmt zum flächigen Abtragen von Material an einer Werkstückoberfläche und zum Glätten der Werkstückoberfläche in einer Fräsbewegung durch Drehung um eine Werkzeugachse in einer vorgegebenen Drehrichtung bei gleichzeitigem Vorschub relativ zur Werkstückoberfläche und umfasst wenigstens eine spanend arbeitende Frässchneide und wenigstens einen spanlos arbeitenden Drücksteg. Jede Frässchneide erstreckt sich durchgehend und ohne Unterbrechungen auf einer um die Werkzeugachse rotationssymmetrischen Umfangsfläche über eine axiale Länge axial zur Werkzeugachse und ist so gestaltet, dass sie bei der Fräsbewegung über ihre gesamte axiale Länge mit einer zur Werkzeugachse radialen spanenden Eingriffstiefe Werkstückspäne von der Werkstückoberfläche abhebt.

Jeder Drücksteg erstreckt sich durchgehend und ohne Unterbrechungen axial zur Werkzeugachse über eine axiale Länge auf einer um die Werkzeugachse rotationssymmetrischen Umfangsfläche und ist so gestaltet, dass er bei der Fräsbewegung über seine gesamte axiale Länge mit einer zur Werkzeugachse radialen spanlosen Eingriffstiefe in die von der zugehörigen Frässchneide spanend bearbeitete Werkstückoberfläche drückt und diese glättet. Wenigstens ein Drücksteg ist in Drehrichtung gesehen einer zugehörigen Frässchneide um einen Teilungswinkel nachfolgend angeordnet.

In den Ausführungsformen ist die axiale Länge um mindestens einen Faktor 5, insbesondere einen Faktor 8, größer als die spanende Eingriffstiefe und um mindestens einen Faktor 10, insbesondere einen Faktor 16, größer als die spanlose Eingriffstiefe. Nicht unter solche Ausführungsformen fallen Gewindefräser, deren Gewindeschneiden deutlich kürzer sind, und die auch keine Schlichtwerkzeuge mit den Merkmalen gemäß der vorliegenden Erfindung sind.

Die Umfangsfläche jeder Frässchneide und jedes Drücksteges weist einen über die axiale Länge konstanten radialen Abstand zur Werkzeugachse auf, ist also zylindrisch. Diese Ausführungsform ist insbesondere von einem Schaftfräser abgeleitet oder mit diesem vergleichbar.

In nicht erfindungsgemäßen Ausführungsformen weist die Umfangsfläche jeder Frässchneide und jedes Drücksteges einen über die axiale Länge in einer axialen Richtung, die vorzugsweise von einer Stirnseite weg gerichtet ist, monoton zunehmenden radialen Abstand zur Werkzeugachse auf. Hierunter fallen insbesondere Kugelsegmente, die maximal so groß sind wie Halbkugeln, wie sie z.B. bei Kugelfräsern auftreten, oder Kegelformen wie bei Winkelfräsern oder konkav oder konvex gekrümmte Formen wie beispielsweise bei Profilfräsern. Nicht darunter fallen Gewindefräser, deren Schneidenform erst monoton zunimmt und dann wieder monoton abnimmt.

Eine "durchgehende" Frässchneide und ein "durchgehender" Drücksteg "ohne Unterbrechungen" bedeuten, dass die Frässchneide und der Drücksteg bei der Bearbeitung jeweils kontinuierlich über ihre gesamte Länge in das Werkstückmaterial eingreifen.

Vorteilhafte Ausgestaltungen und Weiterbildungen des Werkzeugs gemäß Patentanspruch 1 ergeben sich aus den vom Patentanspruch 1 abhängigen Patentansprüchen.

Das erfindungsgemäße Schlichtwerkzeug ist ein Kombinationswerkzeug, das sowohl spanend (oder: spanabhebend) als auch spanlos (oder: umformend, plastisch verformend, glättend) in einer Fräsbewegung arbeitet, d.h. in einer Drehbewegung um die eigenen Werkzeugachse bei gleichzeitiger Vorschubbewegung entlang der Oberfläche, vorzugsweise senkrecht zur Werkzeugachse.

Die Erfindung beruht dabei auf der Überlegung, einen spanabhebenden Bereich und einen spanlos arbeitenden Bereich in Drehrichtung hintereinander anzuordnen, so dass die spanabhebenden Bereiche und die spanlos arbeitenden Bereiche bei Drehung des Schlichtwerkzeugs um die Werkzeugachse nacheinander in das Werkstück eingreifen. Es wird in dieser Reihenfolge beim Bearbeiten des Werkstücks abwechselnd zuerst geschnitten und dann geglättet. Es handelt sich also um eine intermittierende oder diskontinuierliche Arbeitsweise des Schlichtwerkzeugs gemäß der Erfindung, bei dem die zu bearbeitende Werkstückoberfläche gleichzeitig sowohl gefräst als auch kurz darauf spanlos geglättet wird. Ein Vorteil eines solchen Schlichtwerkzeugs ist, dass das Werkstück nach der Bearbeitung eine hohe Oberflächengüte aufweist. Die erzeugte Oberfläche mutet durch dieses Vorgehen feingeschliffen bis poliert an.

Bei einem Verfahren zum flächigen Abtragen von Material an einer Werkstückoberfläche und zum Glätten der Werkstückoberfläche, gemäß Patentanspruch 10, wird in weiteren Aspekten der Erfindung mittels eines Schlichtwerkzeugs nach der Erfindung, welches in einer Fräsbewegung um seine Werkzeugachse in einer vorgegebenen Drehrichtung gedreht wird und gleichzeitig in einer Vorschubbewegung relativ zur Werkstückoberfläche bewegt wird, gearbeitet, wobei die Vorschubbewegung bei dem Abtragen des Materials ausschließlich in zur Werkzeugachse senkrechten Richtungen oder Ebenen erfolgt und/oder keine zur Werkzeugachse axiale Bewegungskomponente enthält. Dies entspricht einem Fräsen entlang der Oberfläche und unterscheidet sich in der Arbeitsweise grundsätzlich vom Gewindefräsen.

In einer bevorzugten Ausführungsform ist jeder Drücksteg von einem Frässteg mit der in Drehrichtung vorhergehenden zugehörigen Frässchneide durch eine erste Trennnut (in Umfangsrichtung) getrennt, die insbesondere als Kühl- und/oder Schmiernut zum Zuführen von Kühl-und/oder Schmiermittel zum Drücksteg und/oder zur Drückfläche vorgesehen ist.

In einer weiteren bevorzugten Ausführungsform ist jeder Frässteg von einem in Drehrichtung nachfolgenden Drücksteg durch eine zweite Trennnut getrennt, die insbesondere als Spannut zum Abführen von Spänen von der Frässchneide vorgesehen ist.

Die erste Trennnut, insbesondere Kühl- und/oder Schmiernut, weist bevorzugt eine radiale Nuttiefe auf, die kleiner, vorzugsweise um 10 % bis 35 % kleiner, ist als die radiale Nuttiefe der zweiten Trennnut, insbesondere Spannut.

Der Drücksteg (8) weist eine Drückfläche auf, die entgegengesetzt zur Drehrichtung in ihrem radialen Abstand von der Werkzeugachse ansteigt, insbesondere bis zu einem Drückgrat in einem in Drehrichtung gesehen hinteren Bereich der Drückfläche. Der Anstieg ist insbesondere im Wesentlichen linear. Die Differenz aus maximalem radialen Abstand und minimalem radialen Abstand definiert bevorzugt eine maximale spanlose Eingriffstiefe.

An die Drückfläche oder an den Drückgrat schließt sich in einer Ausführungsform entgegengesetzt zur Drehrichtung gesehen eine Freifläche und daran oder unmittelbar eine an eine Trennnut, insbesondere Spannut, angrenzende Rückenfläche des Drücksteges an.

In einer Ausführungsform ist in Drehrichtung gesehen vor der Drückfläche eine radial nach innen verlaufende vordere Fläche des Drücksteges angeordnet ist, die an eine Kühl- und/oder Schmiernut angrenzt.

Es kann nun ein Formwinkel der Drückfläche zwischen - 5° und - 50° und/oder ein Freiwinkel der Freifläche des Drücksteges zwischen 5° und 60° und/oder ein Neigungswinkel der vorderen Fläche des Drücksteges zwischen - 15° und - 85 ° gewählt sein.

Bevorzugt ist jede Frässchneide an einem Frässteg ausgebildet.

In einer Ausführungsform schließt sich entgegengesetzt zur Drehrichtung gesehen an die Frässchneide eine Freifläche und/oder eine an eine Trennnut, insbesondere Kühl- und/oder Schmiernut, angrenzende Rückenfläche, insbesondere des Frässteges, an.

In einer Ausführungsform ist in Drehrichtung gesehen vor der Frässchneide eine an eine Spannut angrenzende Spanfläche angeordnet. Ein Spanwinkel der Spanfläche kann aus einem Bereich von 0° bis 20°, beispielsweise 5° bis 10°, gewählt sein und/oder ein Freiwinkel der Freifläche des Frässteges kann zwischen 4° und 45° gewählt sein.

In einer besonders vorteilhaften Ausführungsform ist der Teilungswinkel zwischen einer Frässchneide und einer in Drehrichtung gesehen unmittelbar nachfolgenden Drückfläche, insbesondere deren Drückgrat, kleiner, beispielsweise um 5 % bis 30 % kleiner, als der Teilungswinkel zwischen dieser Drückfläche, insbesondere deren Drückgrat, und der in Drehrichtung gesehen unmittelbar darauf folgenden Frässchneide.

Bei jeweils der gleichen axialen Position entlang der Werkzeugachse und über die gesamte axiale Länge ist der maximale radiale Abstand des Drücksteges, insbesondere der Drückfläche und/oder eines Drückgrates im in Drehrichtung gesehen hinteren Bereich einer Drückfläche des Drücksteges, von der Werkzeugachse größer, insbesondere um 0,01 % bis 5 %, vorzugsweise um 0,1 % bis 2 % größer, als der radiale Abstand der zugehörigen vorausgehenden Frässchneide von der Werkzeugachse. Dadurch ist ein radialer Überstand des Drücksteges gegenüber der Frässchneide definiert.

In einer bevorzugten Ausführungsform verlaufen jeder Drücksteg und die zugehörige Frässchneide jeweils unter einem Drallwinkel gedrallt, insbesondere entlang einer Helix, wobei der Drallwinkel in axialer Richtung konstant ist oder auch zumindest abschnittsweise variiert und/oder insbesondere zwischen 10° und 80° gewählt ist, vorzugsweise zwischen 30° und 50°.

Der maximale radiale Abstand des Drücksteges, insbesondere der Drückfläche und/oder des Drückgrates, von der Werkzeugachse und der radiale Abstand der zugehörigen vorausgehenden Frässchneide von der Werkzeugachse sind jeweils über die gesamte axiale Länge konstant. Frässchneide und Drücksteg verlaufen bevorzugt parallel zueinander oder der Teilungswinkel ist bevorzugt über die gesamte axiale Länge konstant.

Die spanlose Eingriffstiefe ist um mindestens einen Faktor 12 kleiner als die spanende Eingriffstiefe. Die spanende Eingriffstiefe (T bis Tmax) ist vorzugsweise in einem Intervall zwischen der spanlosen Eingriffstiefe und der Nuttiefe der ersten Trennnut, insbesondere Kühl- und/oder Schmiernut, und/oder in einem Intervall von 6 % bis 30 % des radialen Abstandes der Frässchneide gewählt und/oder entspricht zumindest der Differenz aus dem maximalen radialen Abstand des Drücksteges, insbesondere dessen Drückfläche, und dem radialen Abstand der Frässchneide.

In einer bevorzugten Ausgestaltung analog zu einem Schaftfräser ist die rotationssymmetrische Umfangsfläche eine Zylinderfläche und/oder ist das Werkzeug zum Bearbeiten von ebenen oder nur in zwei Raumdimensionen gekrümmten und parallel zur Werkzeugachse gerichteten Werkstückoberflächen geeignet und bestimmt.

Die Erfindung wird nachstehend auch hinsichtlich weiterer Merkmale und Vorteile anhand der Beschreibung eines Ausführungsbeispiels der Erfindung in den beigefügten schematischen Zeichnungen dargestellt.

Es zeigen:

FIG 1 ein Schlichtwerkzeug in einer Ausführungsform mit zwei Frässchneiden und zwei Drückstegen in einer Seitenansicht,

FIG 2 ein Schlichtwerkzeug in einer Ausführungsform mit drei Frässchneiden und drei Drückstegen in einer Seitenansicht,

FIG 3 eine Vorderansicht des Schlichtwerkzeuges nach FIG 2,

FIG 4 das Schlichtwerkzeug nach FIG 2 oder FIG 3 in einem Querschnitt,

FIG 5 eine vergrößerte Darstellung eines Drücksteges des Schlichtwerkzeugs nach FIG 2 bis 4 in einem Querschnitt und

FIG 6 eine vergrößerte Darstellung einer Frässchneide des Schlichtwerkzeugs nach FIG 2 bis 4 in einem Querschnitt.

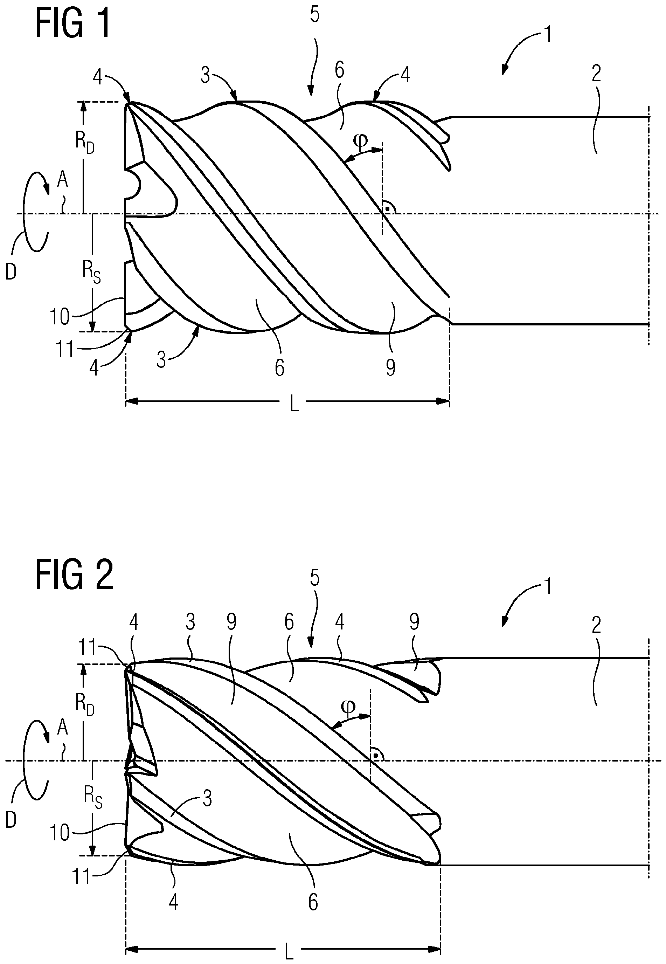

Das Schlichtwerkzeug 1 in den Ausführungsformen gemäß FIG 1 oder FIG 2 weist einen Schaft 2 mit einem Kopfteil 5 an seinem Ende auf. Der Schaft 2 ist zusammen mit dem Kopfteil 5 um eine zentral und längs durch den Schaft 2 verlaufende Werkzeugachse A, rotierbar. Der Schaft 2 ist in der Regel im Wesentlichen zylindrisch, also im Querschnitt im Wesentlichen kreisförmig, geformt, kann neben der Kreisform aber auch andere, auch sich vergrößernde oder verkleinernde und/oder sich in der Form verändernde Querschnittsformen aufweisen. Im Betrieb ist das Schlichtwerkzeug 1 an einem vom Kopfteil 2 abgewandten Ende des Schafts 2 in eine nicht dargestellte Einspannvorrichtung oder einen Werkzeughalter oder ein Werkzeugfutter einer Werkzeugmaschine gehaltert oder eingespannt, die bzw. das mit wenigstens einem Antrieb gekoppelt ist zum Antreiben oder Bewegen des Werkzeugs 1 in einer Drehbewegung um die Werkzeugachse A im Drehsinn D und in einer Vorschubbewegung relativ zur Werkstückoberfläche, typischerweise parallel zu der Werkstückoberfläche.

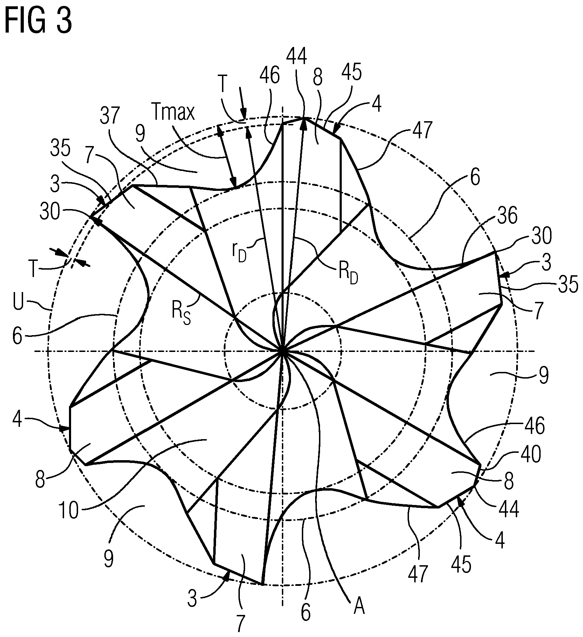

Das Kopfteil 5 weist einen oder mehrere Materialfräsbereiche 3 und einen oder mehrere Materialformbereiche 4 auf, wobei vorzugsweise die Zahl der Materialformbereiche 4 der Zahl der Materialfräsbereiche 3 entspricht. In der Ausführungsform gemäß FIG 1 beträgt diese Zahl jeweils 2 und in der Ausführungsform gemäß FIG 2 bis 4 beträgt diese Zahl jeweils 3. In Umfangs- oder Drehrichtung D folgt jedem Materialfräsbereich 3 ein zugehöriger Materialformbereich 4 nach.

Jeder Materialfräsbereich 3 weist einen durchgehenden Frässteg 7 mit einer in zur Werkzeugachse A axialer Richtung durchgehenden Frässchneide 30 auf.

Jeder Materialformbereich 4 weist einen in der axialen Richtung durchgehenden Drücksteg 8 mit einer in der axialen Richtung durchgehenden Drückfläche 40 und einem Drückgrat 44 auf.

Zwischen jedem Frässteg 7 und dem zugehörigen nachfolgenden Drücksteg 8 ist eine Trennnut 9 ausgebildet, die vorzugsweise als Kühl- und/oder Schmiernut vorgesehen ist zum Kühlen und/oder Schmieren der Arbeitsbereiche, insbesondere der Drückfläche 40, indem Kühl- und/oder Schmiermittel, beispielsweise ein Öl, über die Nut 9 zugeführt wird.

Zwischen jedem Drücksteg 8 und dem nachfolgenden Frässteg 7 ist ebenfalls eine Trennnut 6 ausgebildet, die auch als Spannnut vorgesehen ist zum Aufnehmen und Abführen der Frässpäne der zugehörigen Frässchneide 30.

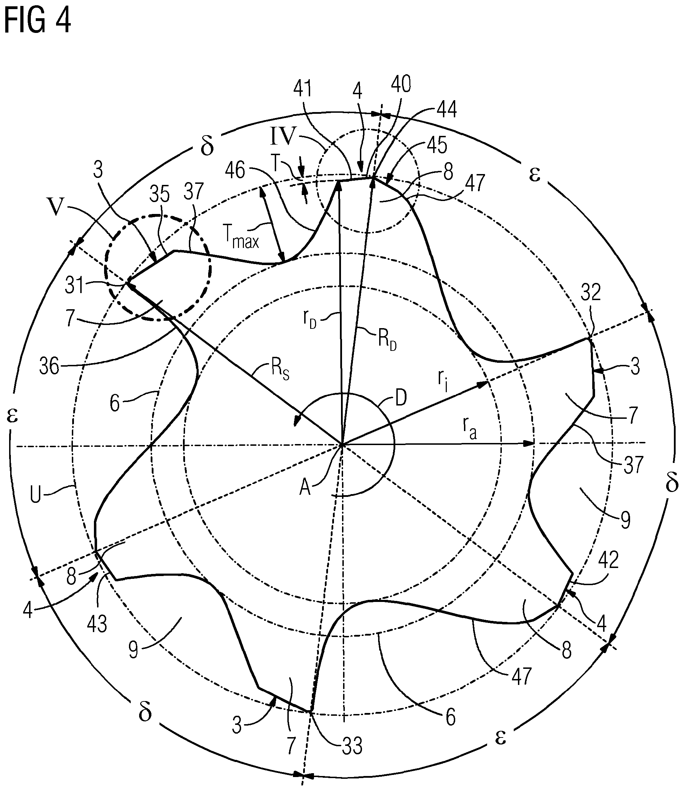

Wie beispielsweise in FIG 4 dargestellt, verläuft jede Spannnut 9 bis auf eine Tiefe, die bei einem inneren Radius oder Kernradius $r_i$ liegt, während jede Trennnut, insbesondere Kühl- und/oder Schmiernut, 6 dagegen bevorzugt nur bis zu einer Tiefe, die einem äußeren Radius $r_a$ entspricht, wobei in der Regel $r_a > r_i$ ist, verläuft.

Die Materialfräsbereiche 3 und ihre Frässtege 7 und Frässchneiden 30 sowie die Materialformbereiche 4 und ihre Drückstege 8 und Drückflächen 40 umlaufen im dargestellten Ausführungsbeispiel die zentrale Werkzeugachse A in einem helikalen Verlauf oder entlang einer Helix, sind also um einen Drallwinkel (oder: Helixwinkel) φ gegen eine Querschnittsebene (oder: Normalenebene) zur Werkzeugachse A geneigt oder gedrallt. Der Drallwinkel (φ) kann beispielsweise zwischen 10° und 80° gewählt werden, insbesondere zwischen 30° und 50°.

Dabei verlaufen die Frässchneiden 30 des Materialfräsbereiches 3 jeweils als äußerste Linien oder Bereiche des jeweiligen Materialfräsbereiches 3 in einem konstanten Radius (oder: radialen Abstand) $R_S$ zur Werkzeugachse A, also auf einer zylindrischen Umfangsfläche U mit diesem Radius $R_S$.

Die Drückgrate 44 als äußerste Punkte der jeweiligen Materialformbereiche 4 verlaufen mit dem konstanten Radius $R_D$ ebenfalls auf einer zylindrischen Umfangsfläche U mit diesem Radius $R_D$. Die Drückflächen 40 der Drückstege 8 der Materialformbereiche 4 steigen von einem in Drehrichtung D gesehen vorderen innersten Punkt oder Bereich mit dem Radius $r_D$ radial nach außen bis zu dem äußersten Punkt oder Bereich am Drückgrat 44 mit dem Radius $R_D$ an, beispielsweise in einem - insbesondere einfach durch einen Anschliff erzeugbaren - linearen oder ebenen Verlauf unter einem Formwinkel $\alpha1$ zu einer Tangentialebene TE am Drückgrat 44, wie in FIG 4 gezeigt, oder mit einer bestimmten, vorzugsweise konvexen, Krümmung.

Der Formwinkel $\alpha1$ kann beispielsweise zwischen - 5° und - 50° gewählt werden. Der Drückgrat 44 kann eine Rundfase aufweisen, typischerweise mit einer Breite von 0,01 bis 0,50 mm, welche ein Einschneiden des Materialformbereichs 4 in das zu bearbeitende Material verhindert und das Glätten des Werkstoffes an der Werkstückoberfläche unterstützt. Der Drückfläche 40 in Drehrichtung D vorgelagert ist eine Vorderfläche 46, die zu der Tangentialebene TE einen Neigungswinkel $\alpha3$ aufweisen kann (FIG 4), der beispielsweise zwischen - 15° und - 85 ° gewählt sein kann.

In Drehrichtung D gesehen hinter dem Drückgrat 44 weist, wie auch in FIG 4 dargestellt, jeder Materialdrückbereich 4 und sein Drücksteg 8 eine Freifläche 45 mit dem Freiwinkel $\alpha2$ zur Tangentialebene TE auf, an die sich dann eine Rückenfläche 47 anschließt, die wiederum an eine nachfolgende Trennnut 6 angrenzt, welche den Materialdrückbereich 4 von dem nachfolgenden Materialfräsbereich 3 trennt und vorzugsweise als Spannnut zum Abführen von Spänen dient. Der Freiwinkel $\alpha2$ der Freifläche 45 kann beispielsweise zwischen 5° und 60° gewählt sein.

Jeder Materialfräsbereich 3 weist seine Frässchneide 30 an seinem in Drehrichtung D vorderen Bereich auf. Eine in die Frässchneide 30 mündende Spanfläche 36 an der Vorderseite des Frässteges 7 ist unter einem Spanwinkel γ zur Normalen der Tangentialebene TE geneigt, der vorzugsweise ein positiver Spanwinkel von 0° bis 20°, beispielsweise ca. 5° bis 10° ist.

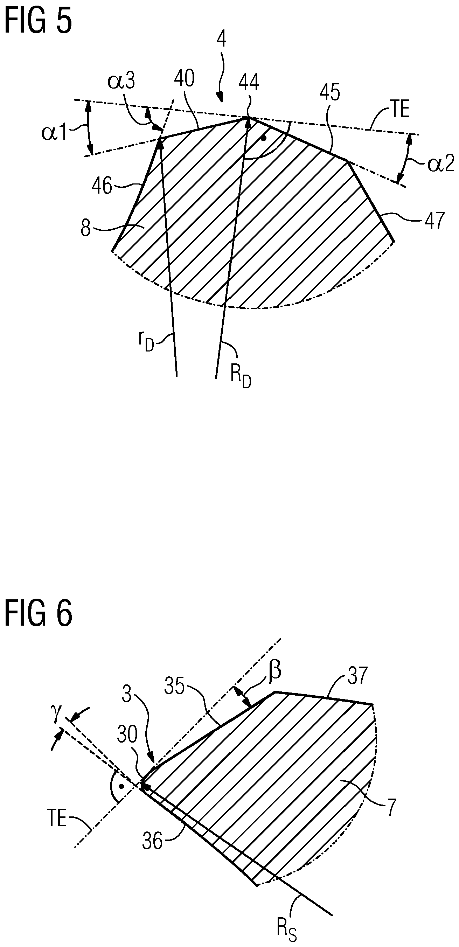

An die Frässchneide 30 schließt sich in Drehrichtung D dahinter eine Freifläche 35 mit dem Freiwinkel zwischen 4° und 45° zu der Tangentialebene TE (vgl. FIG 6) an, die wiederum in eine Rückenfläche 37 des Frässteges 7 übergeht. Die Rückenfläche 37 grenzt an eine Trennnut 9, insbesondere eine Schmiernut 9, wenn Schmiermittel zugeführt wird, an, welche den Materialfräsbereich 3 von einem in Drehrichtung D nachfolgenden Materialformbereich 4 trennt.

Jede Frässchneide 30 und 31 bis 33 ist durchgehend ausgebildet ohne Unterbrechungen und verläuft vorzugsweise als glatte Schlichtfrässchneide ohne Spanteiler entlang einer um die Werkzeugachse A rotationssymmetrischen Umfangsfläche U, die im dargestellten Ausführungsbeispiel eine Zylinderfläche ist.

Nach einer Ausführungsform nimmt das Volumen der Spannuten 6 axial zur Werkzeugachse A von der Stirnseite 10 weg ab, kann aber auch konstant bleiben oder zunehmen.

Der Teilungswinkel $\delta$ zwischen einer Frässchneide 31 oder 32 oder 33 und einem Drückgrat 44 einer in Drehrichtung D gesehen nachfolgenden Drückfläche 41 oder 42 oder 43 ist kleiner, beispielsweise um 5 % bis 30 % kleiner, als der Teilungswinkel $\varepsilon$ zwischen dem Drückgrat 44 dieser Drückfläche 41 oder 42 oder 43 und der in Drehrichtung D gesehen darauf folgenden Frässchneide 32 bzw. 33 bzw. 31. Dadurch wird unterstützt, dass die gerade von einer der Frässchneiden 31 oder 32 oder 33 gefräste Teilfläche unmittelbar von der in Drehrichtung D gesehen nachfolgenden Drückfläche 41 oder 42 oder 43 geglättet wird. Bei einer bevorzugten, aber nicht unbedingt erforderlichen gleichmäßigen Teilung ist $\delta + \varepsilon = 360°/n$ wobei n die Anzahl der Frässchneiden 31 bis 33 und der Drückflächen 41 bis 43 ist, hier z.B. mit n=3 also $\delta + \varepsilon = 120°$. Der Teilungswinkel $\delta$ ist im dargestellten Ausführungsbeispiel z.B. $\delta = 55°$ und der Teilungswinkel $\varepsilon = 65°$.

Die Anordnung und Ausbildung der Frässchneiden und Drückstege sowie der dazwischen liegenden Trennnuten ermöglicht in allen genannten Fällen eine durchgehende Flächenbearbeitung des Werkstücks, wobei das Werkzeug 1 in aller Regel mit einem Vorschub, bei dem seiner Werkzeugachse A parallel zur Werkstückoberfläche gerichtet wird, bewegt wird bei gleichzeitiger schneller Drehung um seine Werkzeugachse A, also bei einer typischen Fräsbewegung, insbesondere eines Schaftfräsers.

Vorzugsweise sind die Frässtege 7 und Drückstege 8 sowie die dazwischenliegenden Trennnuten 6 und 9 alle einstückig und/oder in einem Material ausgebildet und/oder materialabhebend beispielsweise durch Schleifen erzeugt.

Die Drehrichtung D des Schlichtwerkzeugs 1 um die Werkzeugachse A ist im dargestellten Ausführungsbeispiel im Uhrzeigersinn, d.h. das Werkzeug 1 ist rechtsdrehend ausgebildet, kann aber natürlich auch linksdrehend ausgebildet sein.

An der Stirnseite 10 des Schlichtwerkzeugs 1 und dessen Kopfteils 5 kann eine Schutzfase 11 am Außenbereich vorgesehen sein. Ferner können verschiedene Freiflächen und/oder Schälanschnitte vorgesehen sein für die an der Stirnseite 10 auslaufenden Frässchneiden 30 und Drückflächen 40.

Der Radius $R_D$ des Materialformbereichs 4, insbesondere des Drückgrats 44, ist um 0,1% bis 2%, vorzugsweise von 0,5% bis 1% größer als der Radius $R_S$ der Frässchneide 30, d.h. $R_D$ liegt in einem Bereich von 1,001 $R_S$ bis 1,02 $R_S$ und vorzugsweise von 1,005 $R_S$ bis 1,01 $R_S$. Damit ist sichergestellt, dass der Materialformbereich 4 mit seiner Drückfläche 40 bis zum Drückgrat 44 in die bereits von den vorangegangenen Materialfräsbereich 3 mit seiner Frässchneide 30 bearbeitete Teiloberfläche des Werkstücks leicht eindrückt oder leicht formend oder glättend eingreift und diese weiter glättet.

Eine maximale Glätttiefe oder maximale radiale Eingriffstiefe T des Materialformbereichs 4 und seines Drücksteges 8 entspricht der Differenz $R_D-r_D$ und somit der radialen Ausdehnung der Drückfläche 4. Die tatsächliche Glätttiefe oder radiale spanlose Eingriffstiefe des Materialformbereichs 4 und seines Drücksteges 8 entspricht üblicherweise der Differenz $R_D-R_S$ aus den Radien von Drückgrat 44 und Frässchneide 30 und liegt üblicherweise um mindestens einen Faktor 3 vorzugsweise einen Faktor 12 niedriger als die spanende Eingriffstiefe.

Die Frässchneide 30 am vorderen Ende des Frässteges 7 nimmt also einen Span von der - nicht dargestellten - Werkstückoberfläche ab und in diesen Bereich greift unmittelbar nachfolgend die Drückfläche 40 des Drücksteges 8 glättend ein, um eine noch bessere Oberflächengüte zu erreichen, als bereits mit der als Schlichtschneide ausgebildeten Frässchneide 30 erreicht ist. Der Span ist dabei hinsichtlich seiner Spanlänge von der Zahl der Frässchneiden 31 bis 33 und dem Teilungswinkel abhängig und hinsichtlich seiner Spandicke von der radialen spanenden Eingriffstiefe der Frässchneide 30 oder 31 bis 33, die in einem Intervall zwischen $T = R_D-r_D$ und dem theoretisch maximalen Wert $Tmax = R_S-r_a$ liegt und in einem Intervall von 6 % bis 30 % des Radius $R_S$.

Die axiale Länge L der Frässchneiden 30 bzw. 31 bis 33 entspricht der auf die Zylinderachse (Z-Achse) der zylindrischen Umfangsfläche, auf der oder entlang der die Frässchneiden 30 bzw. 31 bis 33 verlaufen, projizierten Länge. Die Bogenlänge oder tatsächliche Länge der Frässchneiden 31 bis 33 sowie der Drückstege 40 bzw. 41 bis 43 ist größer als die axiale Länge L und abhängig von dem Radius sowie dem Umdrehungswinkel oder Polarwinkel um den sich die Frässchneide von ihrem Anfang bis zum Ende um die zentrale Achse A windet oder umläuft.

Die Bogenlänge oder tatsächliche Länge der Frässchneiden 30 und 31 bis 33 ist größer als die auf die Werkzeugachse A projizierte axiale Länge L und entspricht bei einer helikalen Form

$$\sqrt{R_S{}^2 \eta^2 + L^2}$$

Die Bogenlänge oder tatsächliche Länge der Drückstege 40 bzw. 41 bis 43 ist größer als die auf die Werkzeugachse A projizierte axiale Länge L und beträgt bei einer Helix

$$\sqrt{R_D{}^2 \xi^2 + L^2} .$$

Normalerweise haben die Frässchneiden 30 und 31 bis 33 sowie die Drückstege 40 und 41 bis 43 die gleichen axialen Längen L und die gleichen Drallwinkel φ und damit auch die gleichen Umdrehungswinkel oder Polarwinkel η = ξ und deshalb auch die gleichen Bogenlängen.

Das Schlichtwerkzeug 1 bzw. der Schaft 2 kann aus verschiedenen Werkstoffen gebildet sein, u.a. neben einem Werkzeugstahl, insbesondere einem Schnellarbeitsstahl oder einem Hochleistungsschnellstahl (HSS-Stahl) oder einem cobaltlegierter Hochleistungsschnellstahl (HSS-E-Stahl) vorzugsweise auch, zumindest im Kopfteil 5 oder an den Drückstegen 8 und Frässtegen 7 aus einem Hartmetall, insbesondere VHM, oder aus einer Hartmetalllegierung, insbesondere P-Stahl oder K-Stahl oder Cermet, oder aus Sinterhartmetall, insbesondere aus Wolframkarbid oder Titannitrid oder Titankarbid oder Titankarbonitrid oder Aluminiumoxid, oder aus einer Schneidkeramik, insbesondere polykristallines Bornitrid (PKB), oder aus polykristallinem Diamant (PKD). Bevorzugt ist die Oberfläche des Schlichtwerkzeugs 1, insbesondere das Kopfteil 5, mit einer Beschichtung versehen, um die Schlichteigenschaften noch zu verbessern und auch eine Anpassung an verschiedene Werkstückmaterialien zu ermöglichen.

Die vorhergehenden Ausführungsbeispiele beschreiben den Einsatz des Schlichtwerkzeugs 1 beim Umfangsfräsen. Es ist jedoch auch möglich, ein erfindungsgemäßes Schlichtwerkzeug 1 beim Stirnfräsen, also bei einer Bearbeitung des Werkstücks, bei dem die Werkzeugachse A senkrecht statt parallel zur Werkstückoberfläche steht und das Fräswerkzeug in dieser Weise senkrecht dem Werkstück zugestellt wird, zu verwenden. Die Drückstege 8 bzw. Frässchneiden 7 mit den Materialformbereichen 4, bzw. Materialschneidbereichen 3 sind bei einem derartigen Ausführungsbeispiel eines Schlichtwerkzeug 1 auf dessen Stirnseite 10 angeordnet.

Das Schlichtwerkzeug 1 ist vorliegend mit zwei oder drei Frässtegen 7 und Frässchneiden 31 bis 33 und zwei oder drei Drückstegen 8 und Drückflächen 41 bis 43 dargestellt, kann jedoch auch mit einem, vier, fünf, sechs oder sogar mehr Frässtegen und Drückstegen ausgeführt werden.

Anstelle eines helikalen Verlaufes wie dargestellt ist insbesondere auch ein geradliniger Verlauf in einer zur Werkzeugachse A parallelen Richtung auf einer Zylinderfläche als Umfangsfläche U oder auch zur Werkzeugachse A geneigten Richtung beispielsweise auf einer Konusfläche als Umfangsfläche U oder auch auf einer sphärischen Umfangsfläche U oder generell einer zur Werkzeugachse A rotationssymmetrischen Umfangsfläche U möglich.

Auch wenn die Erfindung in den Ausführungsbeispielen und in den Figuren hauptsächlich anhand eines Schaftfräsers erläutert wurde, so ist sie ebenso auch auf andere Fräsertypen anwendbar, bei denen ein flächiger kontinuierlicher Materialabtrag an dem Werkstück mit durchgehenden Frässchneiden erfolgt, beispielsweise bei Schlitzfräsern, Nutenfräsern, Walzfräsern, Scheibenfräsern, ausgenommen jedoch Gewindefräser, bei denen nur in einem kleinen Teilbereich der Oberfläche zur Erzeugung des Gewindegangs ein Materialabtrag erfolgt und eine ganze spezielle helikale Bewegung des Fräsers erforderlich ist.

Bei diesen Fräsern liegen die Frässchneiden und die Drückstege ebenfalls auf rotationssymmetrischen Umfangsflächen, die jedoch nicht bei allen genannten Fräsertypen zylindrische Umfangsflächen mit einem in axialer Richtung konstanten radialen Abstand oder Radius zur Werkzeugachse A sind, sondern in nicht erfindungsgemäßen Ausführungsformen auch davon abweichen können, beispielsweise beim Winkelfräser in Form eines Konus oder bei Kugelfräsern in Form einer teilweisen Kugeloberfläche, die in einer Halbkugel liegt, und bei Profilfräsern beispielsweise in Form von konkaven gekrümmten rotationssymmetrischen Flächen, beispielsweise ähnlich wie ein Viertelkreis oder bei einem Prismenfräser in Form eines mit der Spitze nach außen zeigenden Dreiecks im Längsschnitt. All diesen Umfangsflächen dieser Fräsertypen ist gemeinsam, dass sie in einer axialer Richtung im radialen Abstand oder Radius zur Werkzeugachse A monoton zunehmen, in der Regel in axialer Richtung von der Stirnfläche des Fräsers (oder: von vorne nach hinten) gesehen. Bei einem Gewindefräser nimmt dagegen der radiale Abstand oder Radius der Gewindefräszahnschneide zur Werkzeugachse A in axialer Richtung gemäß dem Gewindeprofil zunächst zu (an der ersten Gewindeflanke) und dann nach Überschreiten des Maximums des Fräszahnes (Zahnkopfes) wieder ab (an der zweiten Gewindeflanke).

## Bezugszeichenliste

| | |
|---|---|
| 1 | Schlichtwerkzeug |
| 2 | Schaft |
| 3 | Materialschneidbereich |
| 4 | Materialformbereich |
| 5 | Kopfteil |
| 6 | Spannut |
| 7 | Frässteg |

| 8 | Drücksteg |
|---|---|
| 9 | Schmiernut |
| 10 | Stirnseite |
| 11 | Schutzfase |
| 30 | Frässchneide |
| 31, 32, 33 | Frässchneide |
| 35 | Freifläche |
| 36 | Spanfläche |
| 37 | Rückenfläche |
| 40 | Drückfläche |
| 41, 42, 43 | Drückfläche |
| 44 | Drückgrat |
| 45 | Freifläche |
| 46 | Vorderfläche |
| 47 | Rückenfläche |
| D | Drehrichtung |
| A | Werkzeugachse |
| U | Umfangsfläche |
| $R_D$, $r_D$ | Drückstegradius |
| $R_S$ | Schneidenradius |
| $r_i$ | innerer Radius |
| $r_a$ | äußerer Radius |
| TE | Tangentialebene |
| $\alpha 1$ | Formwinkel |
| $\alpha 2$ | Freiwinkel |
| $\alpha 3$ | Neigungswinkel |
| $\beta$ | Freiwinkel |
| $\gamma$ | Spanwinkel |
| $\delta$, $\varepsilon$ | Teilungswinkel |
| L | axiale Länge |
| T | Eingriffstiefe |
| Tmax | maximale Eingriffstiefe |

**Patentansprüche**

1. Schlichtwerkzeug (1), insbesondere Schlichtschaftfräser,

a) geeignet und bestimmt zum flächigen Abtragen von Material an einer Werkstückoberfläche und zum Glätten der Werkstückoberfläche in einer Fräsbewegung durch Drehung um eine Werkzeugachse (A) in einer vorgegebenen Drehrichtung (D) bei gleichzeitigem Vorschub relativ zur Werkstückoberfläche und umfassend

b) wenigstens eine spanend arbeitende Frässchneide (30, 31 bis 33), die

b1) sich durchgehend und ohne Unterbrechungen auf einer um die Werkzeugachse rotationssymmetrischen, zylindrischen Umfangsfläche (U) in einem konstanten radialen Abstand ($R_S$) von der Werkzeugachse (A) über eine axiale Länge (L) axial zur Werkzeugachse (A) erstreckt und

b2) so gestaltet ist, dass sie bei der Fräsbewegung über ihre gesamte axiale Länge (L) mit einer zur Werkzeugachse radialen spanenden Eingriffstiefe (T bis Tmax) Werkstückspäne von der Werkstückoberfläche abhebt,

**dadurch gekennzeichnet, dass**

b3) die radiale spanende Eingriffstiefe der Frässchneide in einem Intervall von 6 % bis 30 % ihres radialen Abstandes ($R_S$) von der Werkzeugachse (A) liegt, sowie das Schlichtwerkzeug (1)

c) wenigstens einen spanlos arbeitenden Drücksteg (8) umfasst, der

c1) sich durchgehend und ohne Unterbrechungen axial zur Werkzeugachse (A) über eine axiale Länge (L) auf einer um die Werkzeugachse rotationssymmetrischen, insbesondere zylindrischen, Umfangsfläche erstreckt,

c2) in Drehrichtung (D) gesehen einer zugehörigen Frässchneide (30, 31 bis 33) um einen Teilungswinkel ($\delta$) nachfolgend angeordnet ist und

c3) so gestaltet ist, dass er bei der Fräsbewegung über seine gesamte axiale Länge (L) mit einer zur Werkzeugachse radialen spanlosen Eingriffstiefe (T oder $R_S$ - $R_D$) in die von der zugehörigen Frässchneide spanend bearbeitete Werkstückoberfläche drückt und diese glättet,

c4) wobei der Drücksteg (8) eine Drückfläche (40) aufweist, die entgegengesetzt zur Drehrichtung (D) in ihrem radialen Abstand ($r_D$, $R_D$) von der Werkzeugachse (A) bis auf einen maximalen radialen Abstand ($R_D$) ansteigt,

c5) wobei die radiale spanlose Eingriffstiefe des Drücksteges (8) zumindest der Differenz aus dem maximalen radialen Abstand ($R_D$) des Drücksteges (8) von der Werkzeugachse (A) und dem radialen Abstand ($R_S$) der Frässchneide (30) von der Werkzeugachse (A) entspricht,

d) wobei die radiale spanende Eingriffstiefe (T bis Tmax) um mindestens einen Faktor 5 kleiner ist als die axiale Länge (L) und wobei die radiale spanlose Eingriffstiefe (T oder $R_S$ - $R_D$) um mindestens einen Faktor 10 kleiner ist als die axiale Länge (L),

e) wobei die radiale spanlose Eingriffstiefe um mindestens einen Faktor 12 kleiner ist als die radiale spanende Eingriffstiefe und

f) wobei über die gesamte axiale Länge (L) der maximale radiale Abstand ($R_D$) des Drücksteges (8) von der Werkzeugachse (A) um 0,1 % bis 2 % größer ist als der radiale Abstand ($R_S$) der zugehörigen vorausgehenden Frässchneide (30, 31, 32, 33) von der Werkzeugachse (A) und dadurch ein radialer Überstand des Drücksteges (8) gegenüber der Frässchneide (3) definiert ist.

2. Schlichtwerkzeug nach Anspruch 1, bei dem jeder Drücksteg (8) von einem Frässteg (7) mit der in Drehrichtung vorhergehenden zugehörigen Frässchneide (30) durch eine erste Trennnut (6) getrennt ist, die insbesondere als Kühl- und/oder Schmiernut zum Zuführen von Kühl-und/oder Schmiermittel zum Drücksteg und/oder zur Drückfläche vorgesehen ist, und/oder

bei dem jeder Frässteg (7) von einem in Drehrichtung nachfolgenden Drücksteg (8) durch eine zweite Trennnut (9) getrennt ist, die insbesondere als Spannut zum Abführen von Spänen von der Frässchneide (30) vorgesehen ist,

wobei die erste Trennnut (6), insbesondere Kühl- und/oder Schmiernut, bevorzugt eine radiale Nuttiefe $(R_D - r_a)$ aufweist, die kleiner, vorzugsweise um 10 % bis 35 % kleiner, ist als die radiale Nuttiefe $(R_S - r_i)$ der zweiten Trennnut (9), insbesondere Spannut.

3. Schlichtwerkzeug nach Anspruch 1 oder Anspruch 2, bei dem die Drückfläche (40) entgegengesetzt zur Drehrichtung (D) in ihrem radialen Abstand $(r_D, R_D)$ von der Werkzeugachse (A) bis zu einem Drückgrat (44) in einem in Drehrichtung (D) gesehen hinteren Bereich der Drückfläche (40), und/oder im Wesentlichen linear ansteigt, wobei vorzugsweise die Differenz aus maximalem radialen Abstand $(R_D)$ und minimalem radialen Abstand $(r_D)$ eine maximale spanlose Eingriffstiefe definiert,
und/oder

bei dem sich insbesondere entgegengesetzt zur Drehrichtung (D) gesehen an die Drückfläche (40) oder den Drückgrat (44) eine Freifläche (45) und/oder eine an eine Trennnut, insbesondere Spannut (9), angrenzende Rückenfläche (47) des Drücksteges (8) anschließen bzw. anschließt
und/oder

bei dem in Drehrichtung (D) gesehen vor der Drückfläche (40) eine radial nach innen verlaufende vordere Fläche (46) des Drücksteges (8) angeordnet ist, die an eine Kühl- und/oder Schmiernut (6) angrenzt und/oder

bei dem der Drückgrat (44) eine Rundfase aufweist, typischerweise mit einer Breite von 0,01 bis 0,50 mm.

4. Schlichtwerkzeug nach einem der vorhergehenden Ansprüche , bei dem ein Formwinkel $(\alpha 1)$ der Drückfläche (40) zwischen - 5° und - 50° gewählt ist und/oder bei dem ein Freiwinkel $(\alpha 2)$ der Freifläche (45) des Drücksteges (8) zwischen 5° und 60° gewählt ist und/oder bei dem ein Neigungswinkel $(\alpha 3)$ der vorderen Fläche (46) des Drücksteges (8) zwischen - 15° und - 85 ° gewählt ist.

5. Schlichtwerkzeug nach einem der Ansprüche 1 bis 4, bei dem jede Frässchneide (30, 31, 32, 33) an einem Frässteg (7) ausgebildet ist
und/oder bei dem sich entgegengesetzt zur Drehrichtung (D) gesehen an die Frässchneide eine Freifläche (35) und/oder eine an eine Trennnut, insbesondere Kühl- und/oder Schmiernut (6), angrenzende Rückenfläche (37), insbesondere des Frässteges (8), anschließen bzw. anschließt und/oder bei dem in Drehrichtung (D) gesehen vor der Frässchneide eine an eine Spannut (9) angrenzende Spanfläche (36) angeordnet ist,
wobei vorzugsweise ein Spanwinkel $(\gamma)$ der Spanfläche (36) aus einem Bereich von 0° bis 20°, beispielsweise 5° bis 10°, gewählt ist und/oder wobei vorzugsweise ein Freiwinkel $(\gamma)$ der Freifläche (35) des Frässteges (7) zwischen 4° und 45° gewählt ist.

6. Schlichtwerkzeug nach einem der vorhergehenden Ansprüche, bei dem der Teilungswinkel $(\delta)$ zwischen einer Frässchneide (31 oder 32 oder 33) und einer in Drehrichtung (D) gesehen unmittelbar nachfolgenden Drückfläche (41 oder 42 oder 43), insbesondere deren Drückgrat (44), kleiner, beispielsweise um 5 % bis 30 % kleiner, als der Teilungswinkel $(\varepsilon)$ zwischen dieser Drückfläche (41 oder 42 oder 43), insbesondere deren Drückgrat (44), und der in Drehrichtung (D) gesehen unmittelbar darauf folgenden Frässchneide (32 bzw. 33 bzw. 31).

7. Schlichtwerkzeug nach einem der vorhergehenden Ansprüche, bei dem der radiale Überstand axial zur Werkzeugachse A zumindest abschnittsweise, vorzugsweise über die gesamte axiale Länge (L), konstant ist.

8. Schlichtwerkzeug nach einem der Ansprüche 1 bis 7, bei dem jeder Drücksteg und die zugehörige Frässchneide jeweils unter einem Drallwinkel $(\varphi)$ gedrallt verlaufen, insbesondere entlang einer Helix, wobei der Drallwinkel $(\varphi)$ in axialer Richtung konstant ist oder auch zumindest abschnittsweise variiert und/oder insbesondere zwischen 10° und 80° gewählt ist, insbesondere zwischen 30° und 50°, und/oder

bei dem der maximale radiale Abstand (RD) des Drücksteges (8), insbesondere der Drückfläche (40) und/oder des Drückgrates (44) im in Drehrichtung (D) gesehen hinteren Bereich der Drückfläche (40) des Drücksteges (8), von der Werkzeugachse (A) und der radiale Abstand $(R_S)$ der zugehörigen vorausgehenden Frässchneide (30, 31, 32, 33) von der Werkzeugachse (A) jeweils über die gesamte axiale Länge (L) konstant ist
und/oder

bei dem Frässchneide und Drücksteg parallel zueinander verlaufen oder der Teilungswinkel über die gesamte axiale Länge (L) konstant ist.

9. Schlichtwerkzeug nach Anspruch 2 oder nach Anspruch 2 und einem der vorhergehenden Ansprüche, bei dem die spanende Eingriffstiefe (T bis Tmax) in einem Intervall zwischen der spanlosen Eingriffstiefe $(R_D-r_D)$ und der Nuttiefe $(R_D - r_a)$ der ersten Trennnut (6), insbesondere Kühl- und/oder Schmiernut liegt.

10. Verfahren zum flächigen Abtragen von Material an einer Werkstückoberfläche und zum Glätten der Werkstückoberfläche mittels eines Schlichtwerkzeugs nach einem der Ansprüche 1 bis 9, wobei das Schlichtwerkzeug in einer Fräsbewegung um seine Werkzeugachse (A) in einer vorgegebenen Drehrichtung (D) gedreht wird und gleichzeitig in einer Vorschubbewegung relativ zur Werkstückoberfläche bewegt wird, wobei die Vorschubbewegung bei dem Abtragen des Materials ausschließlich in zur Werkzeugachse (A) senkrechten Richtungen oder Ebenen erfolgt und/oder keine zur Werkzeugachse (A) axiale Bewegungskomponente enthält.

**Claims**

1. A finishing tool (1), in particular an end milling cutter,

   a) that is suitable and intended for the planar removal of material from a workpiece surface and for smoothing the workpiece surface in a milling motion by rotation about a tool axis (A) in a predefined rotational direction (D), with simultaneous advancement relative to the workpiece surface, and comprising

   b) at least one chip-removing milling cutting edge (30, 31 through 33) which

   b1) extends continuously and without interruptions axially with respect to the tool axis (A) over an axial length (L) on a rotationally symmetrical, cylindrical circumferential surface (U), about the tool axis, and

   b2) is designed in such a way that during the milling motion it removes workpiece chips from the workpiece surface over its entire axial length (L) with a radial depth of chip-removing penetration (T to Tmax),

   **characterized in that**

   the radial depth of chip-removing penetration of the milling cutting edge is within an interval of 6% to 30% of its radial distance ($R_S$) from the tool axis (A), and the finishing tool (1)

   c) includes at least one non-chip-removing pressing land (8) that

   c1) extends continuously and without interruptions axially with respect to the tool axis (A) over an axial length (L) on a circumferential surface that is rotationally symmetrical, in particular cylindrical, about the tool axis,

   c2) is arranged, viewed in the rotational direction (D), following an associated milling cutting edge (30, 31 through 33) with an angular pitch ($\delta$) and

   c3) is designed in such a way that during the milling motion it presses into the workpiece surface machined by the associated milling cutting edge over its entire length (L) with a radial depth of non-chip-removing penetration (T or $R_S$ - $R_D$) and smooths it,

   c4) wherein the pressing land (8) has a pressing surface (40) whose radial distance ($r_D$, $R_D$) from the tool axis (A), opposite the rotational direction (D), increases to a maximum radial distance ($R_D$),

   c5) wherein the radial depth of non-chip-removing penetration of the pressing land (8) corresponds at least to the difference between the maximum radial distance ($R_D$) of the pressing land (8) from the tool axis (A) and the radial distance ($R_S$) of the milling cutting edge (30) from the tool axis (A),

   d) wherein the radial depth of chip-removing penetration (T to Tmax) is less than the axial length (L) by at least a factor of 5, and wherein the radial depth of non-chip-removing penetration (T or $R_S$ - $R_D$) is less than the axial length (L) by at least a factor of 10,

   e) wherein the radial depth of non-chip-removing penetration is less than the radial depth of chip-removing penetration by at least a factor of 12, and

   f) wherein the maximum radial distance (RD) of the pressing land (8) from the tool axis (A) over the entire axial length (L) is 0.1% to 2% greater than the radial distance ($R_S$) of the associated preceding milling cutting edge (30, 31, 32, 33) from the tool axis (A), thus defining a radial projection of the pressing land (8) with respect to the milling cutting edge (3).

2. The finishing tool according to Claim 1, wherein each pressing land (8) is separated from a milling land (7), with the associated milling cutting edge (30) preceding in the rotational direction, by a first separating groove (6) that is provided in particular as a cooling and/or lubricating groove for supplying coolant and/or lubricant to the pressing land and/or to the pressing surface, and/or wherein each milling land (7) is separated from a pressing land (8), following in the rotational direction, by a second separating groove (9) that is provided in particular as a chip flute for discharging chips from the milling cutting edge (30), wherein the first separating groove (6), in particular a cooling and/or lubricating groove, preferably has a radial groove depth ($R_D$ - $r_a$) that is less than, preferably 10% to 35% less than, the radial groove depth ($R_S$ - $r_i$) of the second separating groove (9), in particular the chip flute.

3. The finishing tool according to Claim 1 or Claim 2, wherein the radial distance ($r_D$, $R_D$) of the pressing surface (40) from the tool axis (A), opposite the rotational direction (D), increases up to a pressing ridge (44) in a rear area, viewed in the rotational direction (D), of the pressing surface (40), and/or increases essentially linearly, wherein the difference between the maximum radial distance ($R_D$) and the minimum radial distance ($r_D$) preferably defines a maximum depth of chip-removing penetration,
and/or
wherein a flank face (45) and/or rear face (47) of the pressing land (8) adjacent to a separating groove, in particular a chip flute (9), adjoin(s) the pressing surface (40) or the pressing ridge (44), in particular viewed opposite the rotational direction (D),
and/or
wherein a radially inwardly extending front face (46) of the pressing land (8) that adjoins a cooling and/or lubricating groove (6) is situated in front of the pressing surface (40), viewed in the rotational direction (D), and/or
wherein the pressing ridge (44) has a circular bevel typically having a width of 0.01 to 0.50 mm.

4. The finishing tool according to one of the preceding claims, wherein a forming angle ($\alpha 1$) of the pressing surface (40) is selected to be between - 5° and - 50°, and/or wherein a flank angle ($\alpha 2$) of the flank face (45) of the pressing land (8) is selected to be between 5° and 60°, and/or wherein an inclination angle ($\alpha 3$) of the front face (46) of the pressing land (8) is selected to be between - 15° and - 85°.

5. The finishing tool according to one of Claims 1 to 4, wherein each milling cutting edge (30, 31, 32, 33) is formed on a milling land (7) and/or wherein a flank face (35) and/or rear face (37), in particular of the milling land (8), adjacent to a separating groove, in particular a cooling and/or lubricating groove, adjoin(s) the milling cutting edge, viewed opposite the rotational direction (D), and/or wherein a rake face (36) adjoining a chip flute (9) is situated in front of the milling cutting edge, viewed in the rotational direction (D),
wherein a rake angle ($\gamma$) of the rake face (36) is preferably selected from a range of 0° to 20°, for example 5° to 10°, and/or wherein a flank angle ($\gamma$) of the flank face (35) of the milling land (7) is preferably selected to be between 4° and 45°.

6. The finishing tool according to one of the preceding claims, wherein the pitch angle ($\delta$) between a milling cutting edge (31 or 32 or 33) and a directly following pressing surface (41 or 42 or 43), in particular the pressing ridge (44) thereof, viewed in the rotational direction (D), is less than, for example 5% to 30% less than, the pitch angle ($\epsilon$) between this pressing surface (41 or 42 or 43), in particular the pressing ridge (44) thereof, and the directly following milling cutting edge (32 or 33 or 31), viewed in the rotational direction (D).

7. The finishing tool according to one of the preceding claims, wherein the radial projection axially with respect to the tool axis (A) is preferably constant, at least in sections, over the entire axial length (L).

8. The finishing tool according to one of Claims 1 to 7, wherein each pressing land and the associated milling cutting edge in each case extend twisted by a helix angle ($\varphi$), in particular along a helix, wherein the helix angle ($\varphi$) is constant in the axial direction or also varies, at least in sections, and/or in particular is selected to be between 10° and 80°, in particular between 30° and 50°,
and/or
wherein the maximum radial distance ($R_D$) of the pressing land (8), in particular of the pressing surface (40) and/or of the pressing ridge (44) in the rear area of the pressing surface (40) of the pressing land (8), from the tool axis (A), and the radial distance ($R_S$) of the associated preceding milling cutting edge (30, 31, 32, 33) from the tool axis (A), viewed in the rotational direction (D), is in each case constant over the entire axial length (L),
and/or
wherein the milling cutting edge and the pressing land extend parallel to one another, or the pitch angle is constant over the entire axial length (L).

9. The finishing tool according to Claim 2, or according to Claim 2 and one of the preceding claims, wherein the depth of chip-removing penetration (T to Tmax) is within an interval between the depth of non-chip-removing penetration ($R_D$ - $r_D$) and the groove depth ($R_D$ - $r_a$) of the first separating groove (6), in particular the cooling and/or lubricating groove.

10. A method for the planar removal of material from a workpiece surface and for smoothing the workpiece surface by use of a finishing tool according to one of Claims 1 to 9,
wherein the finishing tool is rotated in a milling motion about its tool axis (A) in a predefined rotational direction (D) and is simultaneously moved relative to the workpiece surface in an advancement motion, wherein the advancement motion during removal of the material takes place solely in directions or planes that are perpendicular to the tool axis (A) and/or that contain no motion component that is axial with respect to the tool axis (A).

**Revendications**

1. Outil de finition (1), en particulier fraise à queue de finition,

a) apte et destiné à l'enlèvement de matière en surface sur une surface de pièce à travailler et au polissage de la surface de pièce à travailler lors d'un mouvement de fraisage par une rotation autour d'un axe d'outil (A) dans un sens de rotation prédéfini (D) avec une avance simultanée par rapport à la surface de pièce à travailler, et comprenant

b) au moins un tranchant de fraise (30, 31 à 33) à enlèvement de copeaux,

b1) qui s'étend axialement par rapport à l'axe d'outil (A) en continu et sans interruptions sur une surface circonférentielle (U) cylindrique, à symétrie de rotation autour de l'axe d'outil, à une distance radiale ($R_S$) constante de l'axe d'outil (A) sur une longueur axiale (L), et

b2) qui est réalisé de telle sorte que lors du mouvement de fraisage, elle enlève des copeaux de pièce à travailler de la surface de pièce à travailler sur toute sa longueur axiale (L) avec une profondeur de contact (T à Tmax) d'enlèvement de copeaux, radiale par rapport à l'axe d'outil, **caractérisé en ce que**

b3) la profondeur de contact d'enlèvement de copeaux radiale du tranchant de fraise est comprise dans un intervalle de 6 % à 30 % de sa distance radiale ($R_S$) de l'axe d'outil (A), tout comme l'outil de finition (1)

c) comprend au moins un segment de poussée (8) sans enlèvement de copeaux,

c1) qui s'étend en continu et sans interruptions axialement par rapport à l'axe d'outil (A) sur une longueur axiale (L) sur une surface circonférentielle, en particulier cylindrique, à symétrie de rotation autour de l'axe d'outil,

c2) qui, vu dans le sens de rotation (D), est disposé en aval d'un tranchant de fraise (30, 31 à 33) associé d'un pas angulaire ($\delta$), et

c3) qui est réalisé de telle sorte que lors du mouvement de fraisage il s'enfonce sur toute sa longueur axiale (L) avec une profondeur de contact (T ou $R_S$ - $R_D$) sans enlèvement de copeaux, radiale par rapport à l'axe d'outil, dans la surface d'outil usinée par le tranchant de fraise associé et polit celle-ci,

c4) dans lequel le segment de poussée (8) présente une face de poussée (40) augmentant à l'opposé du sens de rotation (D) au niveau de sa distance radiale ($r_D$, $R_D$) de l'axe d'outil (A) jusqu'à une distance radiale maximale ($R_D$),

c5) dans lequel la profondeur de contact radiale sans enlèvement de copeaux du segment de poussée (8) correspond au moins à la différence entre la distance radiale maximale ($R_D$) du segment de poussée (8) de l'axe d'outil (A) et la distance radiale ($R_S$) du tranchant de fraise (30) de l'axe d'outil (A),

d) dans lequel la profondeur de contact radiale à enlèvement de copeaux (T à Tmax) est inférieure à la longueur axiale (L) au moins d'un facteur 5, et dans lequel la profondeur de contact radiale sans enlèvement de copeaux (T ou $R_S$ - $R_D$) est inférieure à la longueur axiale (L) au moins d'un facteur 10,

e) dans lequel la profondeur de contact radiale sans enlèvement de copeaux est inférieure à la profondeur de contact radiale à enlèvement de copeaux au moins d'un facteur 12, et

f) dans lequel, sur toute la longueur axiale (L), la distance radiale maximale (RD) du segment de poussée (8) de l'axe d'outil (A) est supérieure de 0,1 % à 2 % à la distance radiale ($R_S$) du tranchant de fraise (30, 31, 32, 33) en amont associé de l'axe d'outil (A) et qu'une saillie radiale du segment de poussée (8) est ainsi définie par rapport au tranchant de fraise (3).

2. Outil de finition selon la revendication 1, dans lequel chaque segment de poussée (8) est séparé d'un segment de fraisage (7) avec le tranchant de fraise (30) associée en amont dans le sens de rotation par une première rainure de séparation (6) prévue en particulier sous forme de rainure de refroidissement et/ou de lubrification pour apporter un produit réfrigérant et/ou lubrifiant au segment de poussée et/ou à la face de poussée,
et/ou

dans lequel chaque segment de fraisage (7) est séparé d'un segment de poussée (8) en aval dans le sens de rotation par une deuxième rainure de séparation (9) prévue en particulier sous forme de rainure de passage de copeaux pour évacuer des copeaux du tranchant de fraise (30),

dans lequel la première rainure de séparation (6), en particulier la rainure de refroidissement et/ou de lubrification, présente de préférence une profondeur de rainure radiale ($R_D$ - $r_a$) inférieure de préférence de 10 % à 35 % à la profondeur de rainure radiale ($R_S$ - $r_i$) de la deuxième rainure de séparation (9), en particulier de la rainure de passage de copeaux.

3. Outil de finition selon la revendication 1 ou 2, dans lequel la face de poussée (40), à l'opposé du sens de rotation (D), augmente au niveau de sa distance radiale ($r_D$, $R_D$) de l'axe d'outil (A) à une arête de poussée (44) dans une zone arrière de la face de poussée (40), vue dans le sens de rotation (D), et/ou de manière substantiellement linéaire, la différence entre la distance radiale maximale ($R_D$) et la distance radiale minimale ($r_D$) définissant de préférence une profondeur de contact sans enlèvement de copeaux maximale,
et/ou

dans lequel, en particulier vu à l'opposé du sens de rotation (D), la face de poussée (40) ou l'arête de poussée (44) est suivie d'une face de dépouille (45) et/ou d'une surface arrière (47) adjacente à une rainure de séparation, en particulier à une rainure de passage de copeaux (9), du segment de poussée (8),
et/ou
dans lequel, vu dans le sens de rotation (D), avant la face de poussée (40) est disposée une surface avant (46) du segment de poussée (8) s'étendant radialement vers l'intérieur et adjacente à une rainure de refroidissement et/ou de lubrification (6), et/ou dans lequel l'arête de poussée (44) présente une facette arrondie, typiquement d'une largeur de 0,01 à 0,50 mm.

4. Outil de finition selon l'une quelconque des revendications précédentes, dans lequel un angle de façonnage ($\alpha$1) de la face de poussée (40) est sélectionné entre -5° et -50°, et/ou dans lequel un angle de dépouille ($\alpha$2) de la face de dépouille (45) du segment de poussée (8) est sélectionné entre 5° et 60°, et/ou dans lequel un angle d'inclinaison ($\alpha$3) de la surface avant (46) du segment de poussée (8) est sélectionné entre -15° et - 85°.

5. Outil de finition selon l'une quelconque des revendications 1 à 4, dans lequel chaque tranchant de fraise (30, 31, 32, 33) est réalisée sur un segment de fraisage (7), et/ou dans lequel, vu à l'opposé du sens de rotation (D), le tranchant de fraise est suivi d'une face de dépouille (35) et/ou d'une surface arrière (37) adjacente à une rainure de séparation, en particulier à une rainure de refroidissement et/ou de lubrification (6), en particulier du segment de fraisage (8), et/ou dans lequel, vu dans le sens de rotation (D), une face d'attaque (36) adjacente à une rainure de passage de copeaux (9) est disposée en amont du tranchant de fraise,
dans lequel un angle d'attaque ($\gamma$) de la face d'attaque (36) est de préférence sélectionné dans une plage de 0° à 20°, par exemple de 5° à 10°, et/ou dans lequel un angle de dépouille ($\gamma$) de la face de dépouille (35) du segment de fraisage (7) est de préférence sélectionné entre 4° et 45°.

6. Outil de finition selon l'une quelconque des revendications précédentes, dans lequel le pas angulaire ($\delta$) entre un tranchant de fraise (31 ou 32 ou 33) et une face de poussée (41 ou 42 ou 43) immédiatement en aval, en particulier l'arête de poussée (44) de celle-ci, est inférieur, par exemple inférieur de 5 % à 30 %, au pas angulaire ($\varepsilon$) entre cette face de poussée (41 ou 42 ou 43), en particulier l'arête de poussée (44) de celle-ci, et le tranchant de fraise (32 ou 33 ou 31) immédiatement en aval, vu dans le sens de rotation (D).

7. Outil de finition selon l'une quelconque des revendications précédentes, dans lequel la saillie radiale est constante au moins par endroits, de préférence sur toute la longueur axiale (L), axialement par rapport à l'axe d'outil A.

8. Outil de finition selon l'une quelconque des revendications 1 à 7, dans lequel chaque segment de poussée et le tranchant de fraise associé s'étendent respectivement de manière hélicoïdale selon un angle d'hélice ($\varphi$), en particulier suivant une hélice, dans lequel l'angle d'hélice ($\varphi$) est constant dans la direction axiale ou varie également au moins par endroits et/ou est sélectionné en particulier entre 10° et 80°, en particulier entre 30° et 50°,
et/ou
dans lequel la distance radiale maximale ($R_D$) du segment de poussée (8), en particulier de la face de poussée (40) et/ou de l'arête de poussée (44), dans la partie arrière de la face de poussée (40) du segment de poussée (8), vue dans le sens de rotation (D), de l'axe d'outil (A), et la distance radiale ($R_S$) du tranchant de fraise (30, 31, 32, 33) en aval associé de l'axe d'outil (A) sont respectivement constantes sur toute la longueur axiale (L),
et/ou
dans lequel le tranchant de fraise et le segment de poussée s'étendent en parallèle l'un à l'autre ou le pas angulaire est constant sur toute la longueur axiale (L).

9. Outil de finition selon la revendication 2, ou selon la revendication 2 et l'une quelconque des revendications précédentes, dans lequel la profondeur de contact d'enlèvement de copeaux (T à Tmax) est comprise dans un intervalle entre la profondeur de contact sans enlèvement de copeaux ($R_D$ - $r_D$) et la profondeur de rainure ($R_D$ - $r_a$) de la première rainure de séparation (6), en particulier de la rainure de refroidissement et/ou de lubrification.

10. Procédé d'enlèvement de matière en surface sur une surface de pièce à travailler et de polissage de la surface de pièce à travailler au moyen d'un outil de finition selon l'une quelconque des revendications 1 à 9,
dans lequel l'outil de finition, lors d'un mouvement de fraisage, est amené à tourner autour de son axe d'outil (A) dans un sens de rotation prédéfini (D) et est déplacé en même temps dans un mouvement d'avance par rapport à la surface de pièce à travailler, dans lequel le mouvement d'avance est effectué lors de l'enlèvement de la matière exclusivement dans des directions ou plans perpendiculaires à l'axe d'outil (A) et/ou ne comporte aucune composante de mouvement axiale par rapport à l'axe d'outil (A).

FIG 1

FIG 2

FIG 3

# FIG 4

## FIG 5

## FIG 6

**IN DER BESCHREIBUNG AUFGEFÜHRTE DOKUMENTE**

**In der Beschreibung aufgeführte Patentdokumente**

- DE 102008002406 A1
- EP 2058074 A1
- DE 202006013594 U1
- DE PS1137284 C
- CH 638126 A5
- EP 1669149 B1